# EUROPEAN PATENT SPECIFICATION

(11) **EP 1 935 670 B1**
(45) Date of publication and mention of the grant of the patent: **22.09.2010**
(21) Application number: 07123462.9
(22) Date of filing: 18.12.2007
(51) Int. Cl.: B60C 11/03

(54) **Pneumatic tire**
Luftreifen
Pneu

(30) Priority: 21.12.2006 US 643149
(43) Date of publication of application: 25.06.2008
(73) Proprietor: The Goodyear Tire & Rubber Company, Akron, OH 44316-0001 (US)
(72) Inventor: Nguyen, Gia Van, F-08110 Blagny (FR); Cambron, Anne-France Gabrielle Jeanne-Marie, 7562 Mersch (LU); Severens, Frank, B-6700 Frassem-Arlon (BE); Houba, Raymond Marie Joseph Ghislain, B-6640 Vaux-sur-Sure (BE)
(74) Representative: Kutsch, Bernd

(56) References cited:
- EP-A- 1 616 719
- EP-A- 1 676 695
- FR-A- 2 763 892
- US-A- 4 667 717
- US-B1- 6 656 300

## Description

### Field of the Invention

The present invention relates to a pneumatic tire, and more particularly to a tread of a pneumatic tire wherein the tread is configured to provide a different tread pattern as the tire is worn.

### Background of the Invention

Tire tread patterns are provided with numerous elements such as ribs and blocks, the elements being separated by circumferential and/or transverse grooves. The grooves provide means for water evacuation and form the biting edges of the tread elements.

When a tire is new, the tread has a maximum tread height. This initial height may vary depending upon the intended use of the tire; a winter tire has an increased tread depth in comparison to an all season tire. Regardless of the initial tread depth, when the tire is new, the tread elements have an initial stiffness. The actual stiffness of the tread elements is dictated by the block size, shape, and the presence of any siping. As the tread is worn, the block height decreases while the tread element stiffness increases.

When a tire travels through water, two mechanisms occur: water force-back and water flow through the grooves. The water force back mechanism is always present. However, for a smooth tire, above a particular vehicle speed and water depth, a water bank is formed in front of the footprint leading edge. Slippage between the tire and the road surface will occur unless the water bank is reduced by water flow through the grooves, carrying the water through the footprint. In a new tire, there may be a compromise in the tread pattern between stiffness and wet driving performance. In such a new tire, the water force back mechanism and the non-skid tread depth is sufficient to provide for acceptable aquaplaning resistance. As the tire wears and the non-skid depth reduces, the water flow through the grooves is reduced. The present invention is directed to a tire having a tread that compensates for this reduced flow.

Known tire tread patterns configured to provide a different tread pattern as the tire is worn are disclosed in the documents EP-A-1616719, FR-A-2763892 and EP-A-1676695.

### Summary of the Invention

The invention relates to a tire according to claim 1.

Dependent claims refer to preferred embodiments of the invention.

The tire is designed to have a variable tread pattern, the tread pattern changing with wear, to achieve similar tread performance for the tire when both new and worn. The changing pattern optimizes the worn tire performance in an attempt to maintain the tire's wet performance characteristics.

It is an object of the invention to have a tire tread pattern wherein, with tire wear, new or additional grooves joining the footprint leading and trailing edges appear in the tread. Such new or additional grooves should be free of flow obstacles such as tie-bars or other obstructions.

Disclosed herein is a pneumatic tire, the tire having an equatorial plane. The tire has a tread, the tread having a footprint and the footprint has a leading and trailing edge. The tread has a plurality of grooves creating tread elements therein and defining a non-skid tread depth measured from the radially outer surface of the tread to the radially innermost surface of the grooves. Groove voids are located radially inward of the initial, or unworn, tread surface; thus the groove voids are buried in the non-skid tread depth. The groove voids have opposing circumferential ends and a primary axis of orientation along the circumferential length of the tread. The axis of orientation of the groove voids are within the range of 0°-35° relative to an equatorial plane of the tire. The circumferential ends of the groove voids are aligned such that, when the tire tread is worn to a depth wherein the groove voids are exposed, at least two unobstructed grooves on each side of the equatorial plane of the tire are created. The created grooves extend in the circumferential direction and have a circumferential length greater than the length between the leading and trailing edges of the tread footprint and the groove void depths vary between groove voids forming different circumferential unobstructed grooves.

In another aspect of the invention, the groove voids have an axis of orientation of zero degrees relative to the equatorial plane of the tire.

In another aspect of the invention, the base of the groove void and the base of the grooves are located at the same radial depth of the tire tread. Also, the groove void has a height of 30 to 70% of the non-skid tread depth.

### Definitions

The following definitions are controlling for the disclosed invention.

"Axial" and "axially" are used herein to refer to lines or directions that are parallel to the axis of rotation of the tire.

"Circumferential" means lines or directions extending along the perimeter of the surface of the annular tire parallel to the Equatorial Plane (EP) and perpendicular to the axial direction.

"Groove" means an elongated void area in a tread that may extend circumferentially or laterally about the tread in a straight, curved, or zigzag manner. Circumferentially and laterally extending grooves sometimes have common portions and may be sub classified as "wide" or "narrow." A "narrow groove" has a width in the range from 0.8% to 3% of the compensated tread width and a "wide groove" has a width greater than 3% thereof. The "groove width" is equal to tread surface area occupied by a groove or groove portion, the width of which is in question, divided by the length of such groove or groove portion; thus, the groove width is its average width over its length. Grooves reduce the stiffness of tread regions in which they are located. Grooves may be of varying depths in a tire. The depth of a groove may vary around the circumference of the tread, or the depth of one groove may be constant but vary from the depth of another groove in the tire.

"Inner" means toward the inside of the tire and "outer" means toward its exterior.

"Lateral" means an axial direction.

"Nonskid" means the depth of grooves in a tire tread.

"Radial" and "radially" are used to mean directions radially toward or away from the axis of rotation of the tire.

"Sipe" means a void area in a tread that may extend circumferentially or laterally in the tread in a straight, curved, or zigzag manner. A sipe typically is formed by steel blades inserted into a cast or machined mold or tread ring therefor. In the appended drawings, excluding close up drawings, sipes are illustrated by single lines because they are so narrow. A "sipe" is a groove having a width in the range from 0.2% to 0.8% of the compensated tread width.

"Tread footprint" means the contact area of the tire tread when mounted on a vehicle and when in contact with a road or another surface under nominal load condition and nominal inflation pressure of the tire as measured at a new unworn tire at 0° camber angle according to ETRTO standards.

### Brief Description of the Drawings

The invention will be described by way of example and with reference to the accompanying drawings in which:
FIG. 1 is a perspective view of an unworn tire;
FIG. 1A is an enlarged view of section 1 A from FIG. 1;
FIG. 2 is a perspective view of a tire following wear of the tire tread;
FIG. 2A is an enlarged view of section 2A from FIG. 2;
FIG. 3 is a flat view of the tread of FIG. 1;
FIG. 4 is a flat view of the tread of FIG. 2;
FIG. 5 is a cross-sectional view along line 5-5 of FIG. 3;
FIG. 6 is a cross-sectional view along line 6-6 of FIG. 4;
FIG. 7 is a perspective view of one pitch design of the unworn tread of FIG. 1;
FIG. 8 is an unworn tire tread illustrating another embodiment; and
FIG. 9 is a flat view of the tread of FIG. 8 following wear of the tread.

### Detailed Description of the Invention

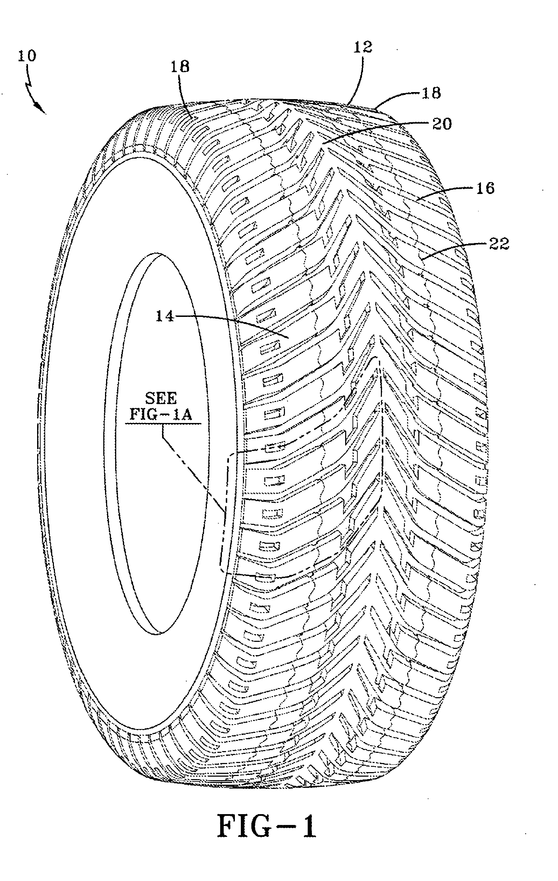

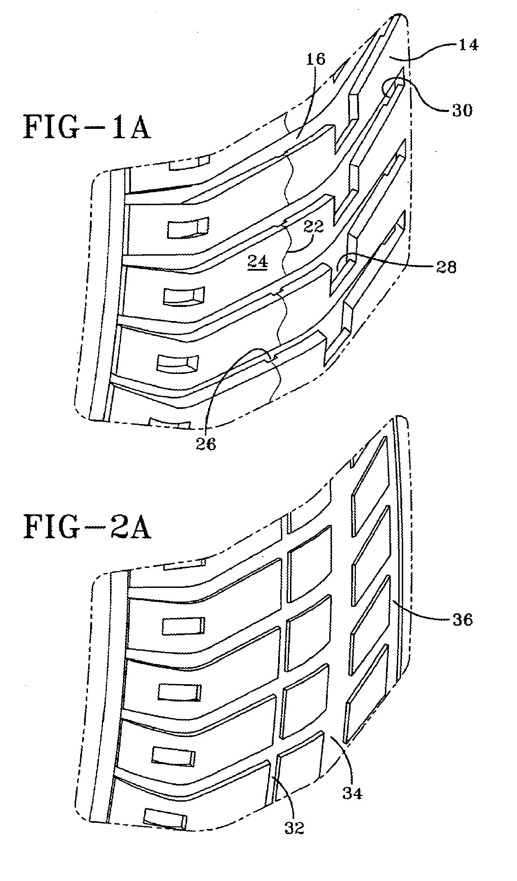

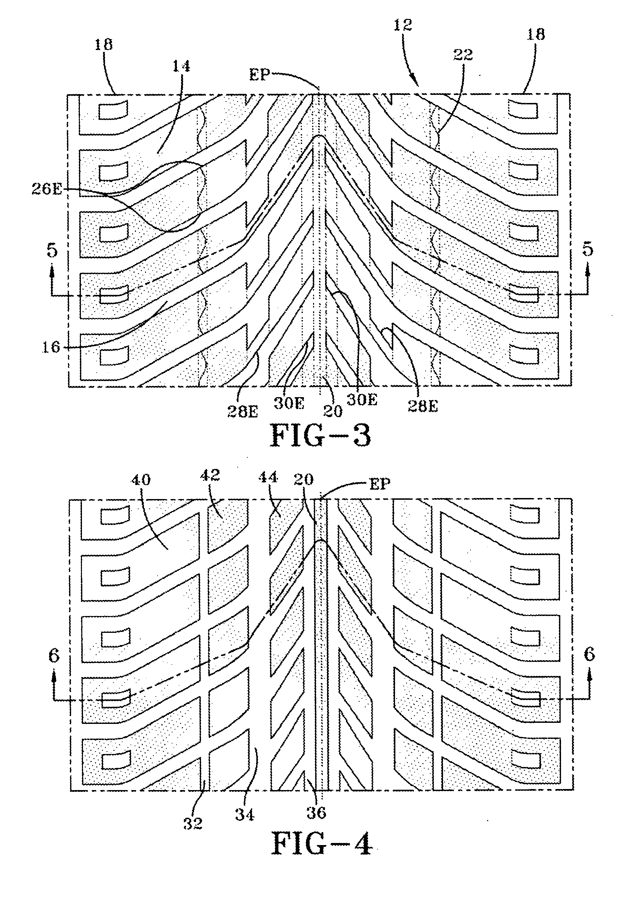

A tire is illustrated in FIG. 1. The tire 10 has a tread 12 comprising a plurality of tread elements 14 separated by inclined lateral grooves 16. The tread elements 14 extend continuously between the tread shoulders 18. Circumferentially adjacent tread elements 14 are connected in the region of the tire equatorial plane EP, creating a quasi rib 20 in the tread, see also FIG. 3. The tread 14 is also provided with sipes 22 that extend between the circumferentially adjacent lateral grooves.

Radially inward of the tread surface 24 are a plurality of groove voids. In the tread of FIG. 1, in each design pitch, extending between a tread shoulder edge and the equatorial plane, radially inward of the tread surface 24 of each tread element are three groove voids 26, 28, 30, see FIGS. 1A, 5, and 7. The groove voids have a primary axis of orientation along the circumferential length of the tire. This axis of orientation is inclined at an angle of 0° to 35° such as 0° or between 5° and 15°, relative to the equatorial plane of the tire. The groove voids 26, 28, 30 also have opposing circumferential ends 26E, 28E, 30E, coincident with the lateral grooves 16. Groove voids 26 have a construct of a type that may be identified as a sipe-groove, wherein, at the tread surface, there is a sipe and at a defined depth of the tread, the sipe transforms to a groove void. As the respective groove voids 26, 28, 30 in circumferentially adjacent tread elements 14 are circumferentially aligned, the groove voids 26, 28, 30 create multiple tunnel-like features in the tread 12.

However, as there is tread rubber located above each groove void, when the tread is unworn or has been subjected to a limited amount of tread wear, an obstruction is created in what may be considered a water flow channel. Due to the absence of continuous unobstructed circumferential grooves, the main water flow mechanism that occurs in the tread of FIG. 1 is water force back.

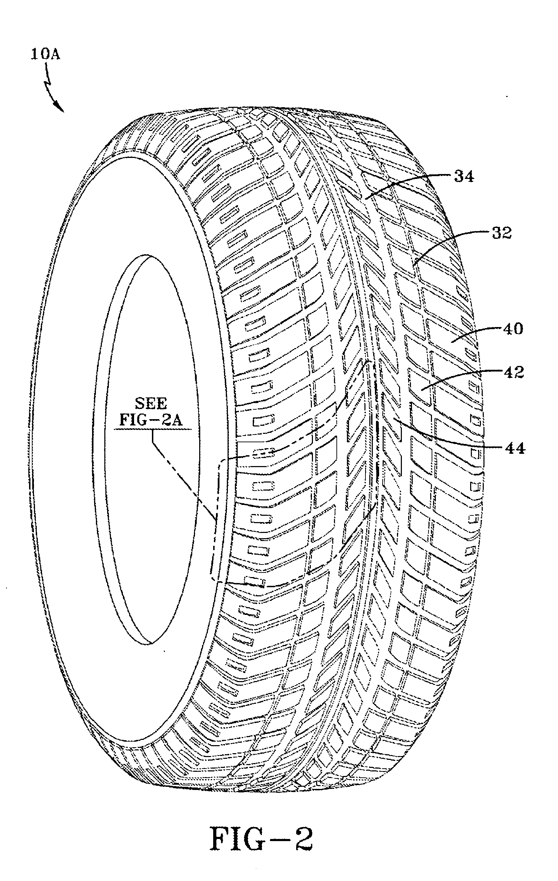

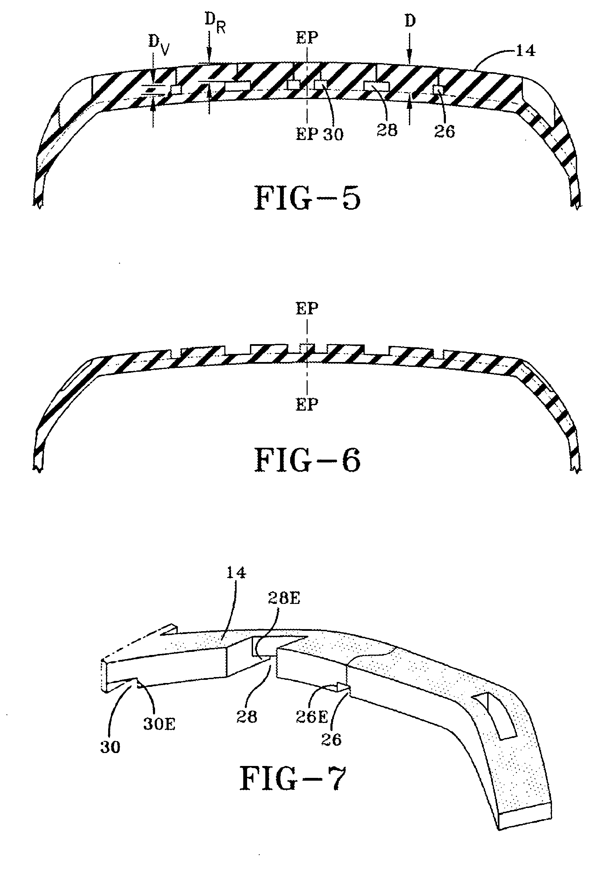

The tread 14 has an initial non-skid tread depth D calculated between the tread surface of the tire when unworn, and the radially innermost base of a groove in the tread, see FIG. 5. As the tread 14 wears, the non-skid tread depth D is reduced, and the groove voids 26, 28, 30 are exposed, creating new unobstructed circumferential grooves 32, 34, 36 in the tread, see FIGS. 2, 4, and 6; hence the term "groove void." A groove void is a tread feature that is a void to the initial tread surface that generates a groove when exposed; thus the groove void has a width in the range of groove widths as defined above. Exposure of the groove voids is based upon the radial depth DR of the rubber above the groove voids. The rubber radial depth DR is 30% to 70% of the full nonskid D; thus the grooves are exposed anywhere from 30 to 70%, alternately 40% to 60%, wear of the full tread depth D. The groove voids 26, 28, 30 ideally also have a radially innermost base aligned at the same tread radial depth as the grooves 16. The circumferential grooves 32, 34, 36 transform the tread of FIG. 1 from one of connected tread elements 14 to a tread having a plurality of non-connected tread blocks 40, 42, 44 located on each side of a center rib 20.

As seen in FIG. 5, the portions of tread rubber radially outward of each groove void all have the same rubber radial depth; i.e. all of the groove voids 26, 28, 30 have the same groove void depth DV. For groove voids 26, that have a sipe component located radially outward thereof, connecting it to the tread surface, the void depth DV, is measured for only that portion of the void which has a width within the definition of a groove width; this is best illustrated in FIG. 5. However, to gradually increase the amount of unobstructed circumferential grooving in the tread, the groove void depths DV may vary. The variation may be selected based upon the axial position of the groove in the tread or the total cross-sectional area of the groove void. For example, if based upon the axial position of the to-be-created groove, it may be desired to have the axially outermost grooves 32 appear before the grooves 36 located nearest the equatorial plane. For such a tread variation, the groove void depth DV of the axially outermost groove void 26 is greater than the groove void depth of the axially inner groove void 30. If it is desired that the groove voids have a constant cross sectional area, the axially wider groove voids would have a reduced groove void depth DV in comparison to the other groove voids. Alternatively, the groove voids may be placed such that the radial depth D_{R} of the rubber above the groove voids 26, 28, 30 is constant, while the groove void depths D_{V} are varied. Such a tread results in varying depths to the exposed grooves, creating more cross-sectional area through which the water may flow.

As the new grooves 32, 34, 36 are continuous, as the tire travels through water, water is free to flow unobstructed from the leading edge of the footprint to the trailing edge of the footprint. To improve water flow in the worn tire tread, it is one aspect of the invention that the newly created grooves fully extend between the leading and trailing footprint edges, contacting, and preferably extending beyond, the leading and trailing edges of the tire footprint. Preferably, the newly created grooves have a circumferential length of at least 20%, alternately at least 50% length between the leading and trailing edges of the tread footprint.

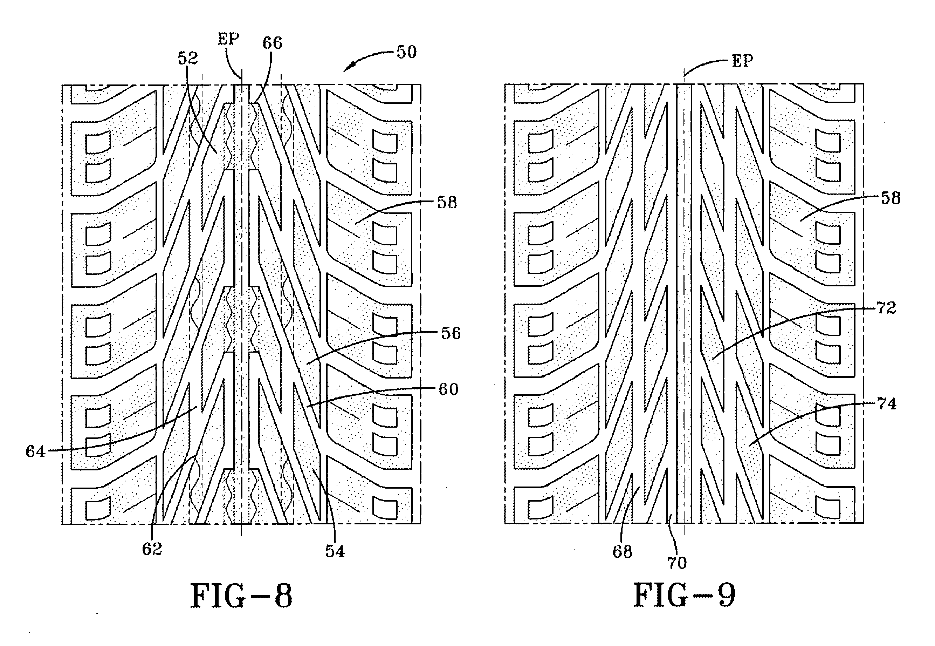

An alternative embodiment of the tire tread is shown in FIGS. 8 and 9. The tread 50 of FIG. 8 is that of an unworn tread. The tread has a combination of connected circumferentially adjacent tread elements 52 creating a rib-like feature at the tire equatorial plane EP. On each lateral side of the central rib-like tread feature is a row of alternating width tread blocks 54, 56. Axially outward of this row of tread blocks is a shoulder row of tread blocks 58. The alternating width tread blocks 54, 56 and shoulder tread blocks 58 are separated by inclined lateral grooves 60. Separating the two rows of blocks is a continuous, non-obstructed circumferential groove.

In the row of alternating width blocks, the greater width blocks 56 are provided with a groove void 62. The groove void 62 is aligned with a short length circumferential groove 64. In the central rib-like feature, groove voids 66 are provided on each side of the equatorial plane EP. As the tread wears, continuous unobstructed circumferential grooves 68, 70 are generated as the rubber above the groove voids 62, 66 is worn away. This results in two rows 72, 74 of individual blocks between a center rib and the shoulder blocks 58. A tread of lower net-to-gross with an increased number of continuous unobstructed circumferential grooves is generated.

## Claims

1. A pneumatic tire, the tire (10) having an equatorial plane, a tread (12), and a tread footprint having a leading and trailing edge, the tread (12) comprising grooves (16) therein, the grooves forming tread elements (14), the tread (12) having a radially outer surface and a non-skid tread depth (D) as measured from the radially outer surface of the tread (12) and a radially innermost surface of the grooves (16), and groove voids (26, 28, 30) being located radially inward of the initial tread surface of the unworn tire, each of the groove voids (26, 28, 30) having a respective groove void depth (D_{V}), wherein the groove voids (26, 28, 30) have opposing circumferential ends and a primary axis of orientation along the circumferential length of the tread (12), the axis of orientation being inclined at 0° to 35° relative to the equatorial plane of the tire (10), the circumferential ends of the groove voids (26, 28, 30) being aligned such that, when the tread (12) is worn to a depth (D_{R}), the groove voids (26, 28, 30) are exposed and at least two unobstructed grooves (32, 34, 36) on each side of the equatorial plane of the tire (12) are created, the unobstructed grooves (32, 34, 36) extending in the circumferential direction and having a circumferential length greater than the length between the leading and trailing edges of the tread footprint, and wherein the groove void depths (D_{V}) vary between groove voids forming different circumferential unobstructed grooves (32, 34, 36).

2. The tire of claim 1 wherein the groove voids (26, 28, 30) have an axis of orientation of zero degrees relative to the equatorial plane of the tire (12).

3. The tire of claim 1 or 2 wherein the base of the groove voids (26, 28, 30) and the base of the grooves (16) are located at the same radial depth of the tread (12).

4. The tire of at least one of the previous claims wherein the groove voids (26, 28, 30) have a height of 30 to 70% of the non-skid tread depth.

5. The tire of at least one of the previous claims wherein the tread (12) comprises lateral grooves (16) and each circumferential end of the groove voids (26, 28, 30) is coincident with a lateral groove (16).

6. The tire of claim 1 wherein the groove voids (26, 28, 30) have an axis of orientation of between 5 and 15 degrees relative to the equatorial plane of the tire (12).

7. The tire of claim 1 wherein the axially outermost circumferential unobstructed groove (32) appears before the circunferential unobstructed groove (36) nearest the equatorial plane.

## Patentansprüche

1. Luftreifen, wobei der Reifen (10) eine Äquatorebene, eine Lauffläche (12) und eine Profil-Aufstandsfläche mit einer Vorder- und Hinterkante aufweist, wobei die Lauffläche (12) Rillen (16) darin umfasst, wobei die Rillen Profilelemente (14) bilden, wobei die Lauffläche (12) eine radial äußere Oberfläche und eine Laufflächenprofiltiefe (D), gemessen ab der radial äußeren Oberfläche der Lauffläche (12) und einer radial innersten Oberfläche der Rillen (16), aufweist, und Rillenleerräume (26, 28, 30), die sich radial einwärts von der anfänglichen Profiloberfläche des unabgenutzten Reifens befinden, wobei jeder Rillenleerraum (26, 28, 30) eine jeweilige Rillenleerraumtiefe (D_{V}) aufweist, wobei die Rillenleerräume (26, 28, 30) gegenüberliegende umlaufende Enden und eine primäre Orientierungsachse entlang der Umfangslänge der Lauffläche (12) aufweisen, wobei die Orientierungsachse bezüglich der Äquatorebene des Reifens (10) um 0° bis 35° geneigt ist, wobei die umlaufenden Enden der Rillenleerräume (26, 28, 30) so ausgerichtet sind, dass, wenn die Lauffläche (12) bis zu einer Tiefe (D_{R}) abgenutzt ist, die Rillenleerräume (26, 28, 30) freigelegt werden und mindestens zwei von Hindernissen freie Rillen (32, 34, 36) auf jeder Seite der Äquatorebene des Reifens (12) erzeugt werden, wobei die von Hindernissen freien Rillen (32, 34, 36) sich in der Umfangsrichtung erstrecken und eine Umfangslänge aufweisen, die größer als die Länge zwischen den Vorder- und Hinterkanten der Profil-Aufstandsfläche ist, und wobei die Rillenleerraumtiefen (D_{V}) zwischen Rillenleerräumen, die verschiedene umfangsgerichtete, von Hindernissen freie Rillen (32, 34, 36) bilden, schwanken.

2. Reifen nach Anspruch 1, wobei die Rillenleerräume (26, 28, 30) eine Orientierungsachse von null Grad bezüglich der Äquatorebene des Reifens (12) aufweisen.

3. Reifen nach Anspruch 1 oder 2, wobei der Grund der Rillenleerräume (26, 28, 30) und der Grund der Rillen (16) sich auf der gleichen radialen Tiefe der Lauffläche (12) befinden.

4. Reifen nach mindestens einem der vorgenannten Ansprüche, wobei die Rillenleerräume (26, 28, 30) eine Höhe von 30 bis 70% der Laufflächenprofiltiefe aufweisen.

5. Reifen nach mindestens einem der vorgenannten Ansprüche, wobei die Lauffläche (12) seitwärts gerichtete Rillen (16) aufweist und jedes Umfangsende der Rillenleerräume (26, 28, 30) mit einer seitwärts gerichteten Rille (16) zusammenfällt.

6. Reifen nach Anspruch 1, wobei die Rillenleerräume (26, 28, 30) eine Orientierungsachse von zwischen 5 und 15 Grad bezüglich der Äquatorebene des Reifens (12) aufweisen.

7. Reifen nach Anspruch 1, wobei die axial äußerste umfangsgerichtete, von Hindernissen freie Rille (32) vor der am nächsten bei der Äquatorebene gelegenen umfangsgerichteten, von Hindernissen freien Rille (36) erscheint.

## Revendications

1. Bandage pneumatique, le bandage pneumatique (10) possédant un plan équatorial, une bande de roulement (12) et une sculpture de bande de roulement possédant un bord avant et un bord arrière, des rainures (16) étant pratiquées dans la bande de roulement (12), les rainures formant des éléments de bande de roulement (14), la bande de roulement (12) possédant une surface externe en direction radiale et une profondeur de bande de roulement minimale (D) telle qu'on la mesure entre la surface externe de la bande de roulement (12) en direction radiale et la surface la plus interne des rainures (16) en direction radiale, des vides en forme de rainures (26, 28, 30) étant disposés à l'intérieur en direction radiale de la surface de bande de roulement initiale du bandage pneumatique non usé, chacun des vides en forme de rainures (26, 28, 30) possédant une profondeur de vide en forme de rainure respective (Dᵥ), les vides en forme de rainures (26, 28, 30) possédant des extrémités circonférentielles opposées et un axe principal d'orientation s'étendant sur la longueur circonférentielle de la bande de roulement (12), l'axe d'orientation étant incliné en formant un angle de 0° à 35° par rapport au plan équatorial du bandage pneumatique (10), les extrémités circonférentielles des vides en forme de rainures (26, 28, 30) étant mises en alignement, de telle sorte que, lorsque la bande de roulement (12) est usée jusqu'à une profondeur (D_{R}), les vides en forme de rainures (26, 28, 30) sont exposés et on obtient la formation d'au moins deux rainures non obstruées (32, 34, 36) de chaque côté du plan équatorial du bandage pneumatique (12), les rainures non obstruées (32, 34, 36) s'étendant en direction circonférentielle et possédant une longueur circonférentielle qui est supérieure à la longueur s'étendant entre les bords avant et arrière de la sculpture de la bande de roulement, et dans lequel les profondeurs (Dᵥ) des vides en forme de rainures varient entre des vides en forme de rainures formant différentes rainures circonférentielles non obstruées (32, 34, 36).

2. Bandage pneumatique selon la revendication 1, dans lequel les vides en forme de rainures (26, 28, 30) possèdent un axe d'orientation formant un angle de 0° par rapport au plan équatorial du bandage pneumatique (12).

3. Bandage pneumatique selon la revendication 1 ou 2, dans lequel la base des vides en forme de rainures (26, 28, 30) et la base des rainures (16) sont situées à la même profondeur radiale de la bande de roulement (12).

4. Bandage pneumatique selon au moins une des revendications précédentes, dans lequel les vides en forme de rainures (26, 28, 30) possèdent une hauteur qui représente de 30 à 70 % de la profondeur de sculpture minimale de bande de roulement.

5. Bandage pneumatique selon au moins une des revendications précédentes, dans lequel la bande de roulement (12) comprend des rainures latérales (16), chaque extrémité circonférentielle des vides en forme de rainures (26, 28, 30) étant confondue avec une rainure latérale (16).

6. Bandage pneumatique selon la revendication 1, dans lequel les vides en forme de rainures (26, 28, 30) possèdent un axe d'orientation formant un angle entre 5 et 15° par rapport au plan équatorial du bandage pneumatique (12).

7. Bandage pneumatique selon la revendication 1, dans lequel la rainure circonférentielle non obstruée (32) située le plus à l'extérieur en direction axiale apparaît avant la rainure circonférentielle non obstruée (36) la plus proche du plan équatorial.
